# EUROPÄISCHE PATENTSCHRIFT

(11) **EP 3 098 102 B1**
(45) Veröffentlichungstag und Bekanntmachung des Hinweises auf die Patenterteilung: **03.10.2018**
(21) Anmeldenummer: 16169711.5
(22) Anmeldetag: 13.05.2016
(51) Int. Cl.: B60H 1/24, B60H 1/00

(54) **FAHRZEUGKABINE**
VEHICLE CABIN
CABINE DE VEHICULE

(30) Priorität: 26.05.2015 DE 102015209581
(43) Veröffentlichungstag der Anmeldung: 30.11.2016
(73) Patentinhaber: Deere & Company, Moline, IL 61265 (US)
(72) Erfinder: Ehricht, Ralf, 69469 Weinheim (DE); Berg, Alexander, 68199 Mannheim (DE); Jurzok, Corinna, 67655 Kaiserslautern (DE); Sananikone, Phouphadeth, 67063 Ludwigshafen (DE)
(74) Vertreter: Reichert, Christian

(56) Entgegenhaltungen:
- DE-A1- 19 754 174
- DE-A1-102008 001 092
- DE-A1-102009 042 698
- DE-A1-102012 015 151
- JP-A- S5 711 108
- JP-A- 2008 141 945

## Beschreibung

Die Erfindung betrifft eine Fahrzeugkabine mit einer Klimatisierungseinrichtung, insbesondere für ein landwirtschaftliches Arbeitsfahrzeug, um mittels der Klimatisierungseinrichtung eine zumindest bezüglich der Temperatur konditionierte Luftmenge einem Raumvolumen der Fahrzeugkabine zuzuführen, und einem dem Raumvolumen zugeordneten Abluftpfad, um eine Abluftmenge dem Raumvolumen der Fahrzeugkabine zu entnehmen.

Fahrzeugkabinen beispielsweise von landwirtschaftlichen Arbeitsfahrzeugen in Form von Traktoren werden heutzutage regelmäßig mit Klimatisierungseinrichtungen ausgestattet, um das Raumvolumen innerhalb der Fahrzeugkabine aus ein für die Bedienperson angenehme Temperatur zu temperieren. Zunächst umfasst Temperieren des Raumvolumen ein Kühlen, da entweder die Außentemperatur auf einem Niveau liegt, welches eine Innenraumtemperatur auf einem für die Bedienperson nicht mehr akzeptablen Niveau zur Folge hätte, oder es infolge von Sonneneinstrahlung auf die Kabine zu einem Aufheizen dieser auf ein ebenfalls nicht mehr akzeptables Temperaturniveau kommen würde. Zusätzlich kann Temperieren des Raumvolumens auch Heizen umfassen. Temperieren im Sinne eines Kühlens ist grundsätzlich sehr energieaufwändig, da ein Kältemittelkreislauf vorgehalten werden muss, in dem ein durch einen Antriebsmotor angetriebener Kältemittelkompressor ein Kühlmittel verdichten muss, um das Kühlmittel an geeigneter Stelle zu expandieren und damit der Umgebung Wärme zu entziehen. Regelmäßig ist es so, dass die Temperatur des Raumvolumens in der Fahrzeugkabine auf einem Bereich von 20° bis 25° temperiert wird. Da hierfür kontinuierlich über die Klimatisierungseinrichtung eine deutlich kühler temperiert Luftmenge dem Raumvolumen in der Fahrzeugkabine zugeführt werden muss, herrscht in der Fahrzeugkabine ein zumindest geringe Überdruck gegenüber der Umgebung und zudem entweicht entweder über ohnehin vorhanden Undichtigkeit in der Hülle der Fahrzeugkabine oder über einen definierten Abluftpfad in der Hülle der Fahrzeugkabine Abluft aus dem Raumvolumen. Somit entweicht ohne weitere Nutzung zuvor energieaufwändig in einen Bereich von 20° bis 25° temperiert Abluft in die Umgebung.

Weiterhin weisen landwirtschaftliche Arbeitsmaschinen heutzutage weitere Kühlvorrichtungen auf, mit denen beispielsweise Kraftstoffanlagen oder Zuführanlagen für Zusätze, die der Abgasanlage zugeführt werden, gekühlt werden. Schließlich regelmäßig mehrere elektronische Bauteile in Form von Steuergeräten anzutreffen, die ebenfalls einer Kühlung bedürfen und die in einem einfachsten Fall über verrippte Kühlelemente verfügen.

Die folgenden Dokumente sind bekannt: DE19754174, DE102012015151, DE102009042698, JP2008141945 und DE102008001092. Ausgehend hiervon besteht die Aufgabe der vorliegenden Erfindung darin, eine Fahrzeugkabine bereitzustellen, die in der Lage ist, einen Abluftstrom nicht ungenutzt in die Umgebung zu entlassen.

Die Aufgabe wird gelöst durch eine Fahrzeugkabine mit einer Klimatisierungseinrichtung, insbesondere für ein landwirtschaftliches Arbeitsfahrzeug, um mittels der Klimatisierungseinrichtung eine zumindest bezüglich der Temperatur konditionierte Luftmenge einem Raumvolumen der Fahrzeugkabine zuzuführen, und einem dem Raumvolumen zugeordneten Abluftpfad, um eine Abluftmenge dem Raumvolumen der Fahrzeugkabine zu entnehmen, wobei in dem Abluftpfad ein Wärmetauscher einer eine Wärmemenge ableitenden Kühlvorrichtung angeordnet ist und der Wärmetauscher zur Abgabe einer Wärmemenge aus der Kühlvorrichtung von der Abluftmenge beaufschlagt ist, wobei es sich bei der Kühlvorrichtung um einen Kühlkreislauf einer Zuführvorrichtung für Harnstoff handelt.

Die erfindungsgemäße Fahrzeugkabine wird anhand der nachfolgenden Figur beschrieben.

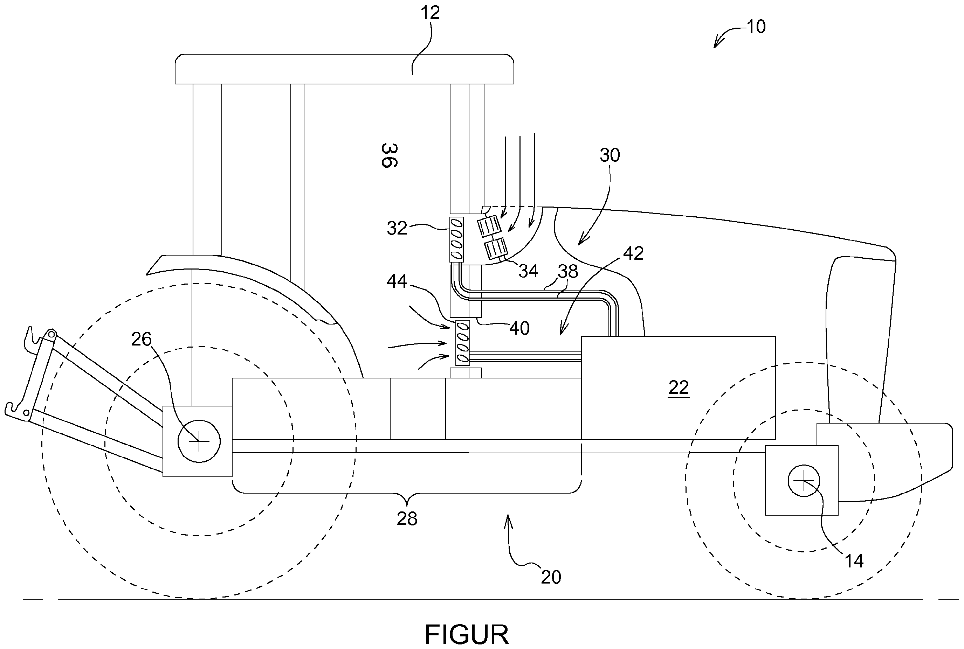

Die Figur zeigt ein landwirtschaftliches Arbeitsfahrzeug 10 in Gestalt eines Traktors mit einem Antriebsstrang 20 in einer möglichen Ausgestaltung. Das Arbeitsfahrzeug 10 umfasst ferner eine Fahrzeugkabine 12, eine vordere Fahrzeugachse 14 und eine hintere Fahrzeugachse 26. Die Fahrzeugkabine 12 umschließt ein Raumvolumen 36. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden. Der Antriebsstrang 20 umfasst ferner einen Antriebsmotor 22, der als Verbrennungskraftmaschine ausgeführt sein kann, und eine Getriebestruktur 28, die im Rahmen diese Beschreibung keiner weiteren Erwähnung bedarf.

Die Fahrzeugkabine 12 umfasst ferner eine Klimatisierungsvorrichtung 30, mit einem im Bereich der Fahrzeugkabine 12 angeordneten Verdampfer 32, der über ein Frischluftgebläse 34 mit Umgebungsluft beaufschlagt werden. Zusätzlich ist regelmäßig ein nicht dargestellter Heizungswärmetauscher vorgesehen, um die eintretende Umgebungsluft zu heizen. Der Verdampfer 32 ist über Kältemittel führende Leitung mit weiteren, in der Nähe des Antriebsmotors angeordneten Komponenten der Klimatisierungsvorrichtung 30 verbunden, beispielsweise einem Kühlmittelkompressor, einem Kühlmittelkondensator und einem Filtertrockner.

Vorliegend ist in einem vorderen, unteren Bereich der Fahrzeugkabine 12 eine Abluftpfad 40 angeordnet, der allerdings bedarfsweise auch an anderer Stelle der Fahrzeugkabine 12 angeordnet sein kann. Der Abluftpfad 40 dient zunächst dazu, dem Raumvolumen 36 eine Abluftmenge in Abhängigkeit der über das Frischluftgebläse 34 aus der Umgebung zugeführten Luftmenge zu entnehmen. Hierbei kann der Öffnungsquerschnittdes Abluftpfades 40 derart angepasst sein, dass sich in der Fahrzeugkabine bei Betrieb des Frischluftgebläses 34 in einer niedrigen Leistungsstufe ein definierte Überdruck gegenüber der Umgebung einstellt.

### Bezugszeichenliste

- 10: Arbeitsfahrzeug
- 12: Fahrzeugkabine
- 14: vordere Fahrzeugachse
- 20: Antriebsstrang
- 22: Antriebsmotor
- 26: hintere Fahrzeugachse
- 28: Getriebestruktur
- 30: Klimatisierungsvorrichtung
- 32: Verdampfer
- 34: Frischluftgebläse
- 36: Raumvolumen
- 40: Abluftpfad

## Patentansprüche

1. Fahrzeugkabine (12) mit einer Klimatisierungseinrichtung (30), insbesondere für ein landwirtschaftliches Arbeitsfahrzeug (10), um mittels der Klimatisierungseinrichtung (30) eine zumindest bezüglich der Temperatur konditionierte Luftmenge einem Raumvolumen (36) der Fahrzeugkabine (12) zuzuführen, und einem dem Raumvolumen (36) zugeordneten Abluftpfad (40), um eine Abluftmenge dem Raumvolumen (36) der Fahrzeugkabine (12) zu entnehmen,
wobei in dem Abluftpfad (40) ein Wärmetauscher (44) einer eine Wärmemenge ableitenden Kühlvorrichtung (42) angeordnet ist und der Wärmetauscher (44) zur Abgabe einer Wärmemenge aus der Kühlvorrichtung (42) von der Abluftmenge beaufschlagt ist, **dadurch gekennzeichnet, dass** es sich bei der Kühlvorrichtung (42) um einen Kühlkreislauf einer Zuführvorrichtung für Harnstoff handelt.

## Claims

1. Vehicle cabin (12) having an air-conditioning device (30), in particular for an agricultural work vehicle (10), in order to feed a quantity of air, which is conditioned at least with respect to the temperature, to a spatial volume (36) of the vehicle cabin (12) by means of the air-conditioning device (30), and having an exhaust-air path (40), which is assigned to the spatial volume (36), in order to remove a quantity of exhaust air from the spatial volume (36) of the vehicle cabin (12),
wherein a heat exchanger (44) of a cooling device (42) which dissipates a quantity of heat is arranged in the exhaust-air path (40), and the heat exchanger (44) is acted upon by the quantity of exhaust air for the purpose of releasing a quantity of heat from the cooling device (42), **characterized in that** the cooling device (42) is a cooling circuit of a feed device for urea.

## Revendications

1. Cabine de véhicule (12) comprenant un dispositif de climatisation (30), en particulier pour un engin agricole (10), afin d'acheminer, au moyen du dispositif de climatisation (30), une quantité d'air climatisé au moins en termes de température à un volume spatial (36) de la cabine de véhicule (12), et comprenant un chemin d'air vicié (40) associé au volume spatial (36), afin d'extraire une quantité d'air vicié hors du volume spatial (36) de la cabine de véhicule (12),
un échangeur de chaleur (44) d'un dispositif de refroidissement (42) évacuant une quantité de chaleur étant disposé dans le chemin d'air vicié (40), et l'échangeur de chaleur (44) étant sollicité par la quantité d'air vicié pour évacuer une quantité de chaleur à partir du dispositif de refroidissement (42), **caractérisée en ce que** le dispositif de refroidissement (42) est un circuit de refroidissement d'un dispositif d'alimentation en urée.
